**Europäisches Patentamt**

**European Patent Office**

**Office européen des brevets**

(19)

(11) Publication number : **0 487 334 B1**

## EUROPEAN PATENT SPECIFICATION

(12)

(45) Date of publication of patent specification :
09.08.95 Bulletin 95/32

(51) Int. Cl.⁶ : **G11B 5/704**

(21) Application number : **91310710.8**

(22) Date of filing : **20.11.91**

(54) **Magnetic recording tape and method for fabricating same.**

(30) Priority : **20.11.90 JP 317196/90**

(43) Date of publication of application :
**27.05.92 Bulletin 92/22**

(45) Publication of the grant of the patent :
**09.08.95 Bulletin 95/32**

(84) Designated Contracting States :
**DE FR GB**

(56) References cited :
**PATENT ABSTRACTS OF JAPAN vol. 14, no.
501 (M-104)2 November 1990 JP-A-2 208 039 (
TEIJIN LTD ) 17 August 1990
PATENT ABSTRACTS OF JAPAN vol. 14, no.
119 (M-094)6 March 1990 & JP-A-1 316 266 (
TORAY IND INC ) 21 December 1989**

(73) Proprietor : **MATSUSHITA ELECTRIC
INDUSTRIAL CO., LTD.
1006, Oaza Kadoma
Kadoma-shi, Osaka-fu, 571 (JP)**

(72) Inventor : **Suzuki, Hiroshi**
**476-2-3-1311 Kanou
Higashiosaka-shi, Osaka (JP)**
Inventor : **Shimasaki, Yukihiro**
**70-13, Ikejiri
Sanda-shi, Hyogo-ken (JP)**
Inventor : **Sakamoto, Kazunori**
**4-2-8, Hoshida Yamate
Katano-shi, Osaka (JP)**
Inventor : **Mido, Yuji**
**1-2-7 Oohasu Minami
Higashiosaka-shi, Osaka (JP)**
Inventor : **Kisoda, Akira**
**4-3, Kaji-machi 3-chome
Moriguchi-shi, Osaka (JP)**
Inventor : **Hirokoh, Masaki**
**2-3-20-501, Morigo-cho
Nada-ku, Kobe (JP)**

(74) Representative : **Senior, Alan Murray et al
J.A. KEMP & CO.,
14 South Square,
Gray's Inn
London WC1R 5LX (GB)**

## Description

This invention relates to magnetic recording tapes which are utilizable in various fields of video tape recording and reproducing apparatus, sound allied apparatus and information allied apparatus. More particularly, the invention relates to coat-type magnetic recording tapes which are suitable employed for high density recording and also to a method for fabricating such tapes.

Recent trends toward high image quality in the field of video tape recorders, digital signal processing in the field of sound allied apparatus, and miniaturization and high speed processing in the field of peripheral equipments of computers have lead to a steady increase in quantity of information with which external memories deal. Coat-type magnetic recording tapes which have been widely employed as a recording medium should meet a requirement for high density recording and reproduction of signals. In particular, it has become important to obtain strong signals in high density recording and reproducing operations.

In one such attempt, it has been proposed to reduce the surface roughness of a magnetic layer to as small as possible so that the magnetic signal loss, as is caused by the space between the magnetic layer and a magnetic head, is reduced correspondingly. Another approach is to increase the relative speed between the tape and the magnetic head, so that electric signals with a high density are magnetically recorded as a greater recording wavelength. In this approach, the sliding conditions between the tape and a recording device such as a rotary cylinder become so severe that it is necessary to significantly improve the durability and the wear resistance of the tape. It has been found that an attempt to improve both characteristics by known techniques involves the following problem.

In existing coat-type magnetic recording mediums, the materials of the magnetic recording layer and processing techniques therefor have been progressively advanced, and the surface smoothness of the magnetic recording layer after calendering or mirror finish comes very close to that of a magnetic metal thin film. How to keep such surface properties is technically important for achieving high density recording.

However, increasing the surface smoothness of the tape brings about an increase of a true contact area between the tape and the head or other running parts in the system. This results in severe sliding conditions with the running system at the time of running of the tape. More particularly, the increase of the contact area will undesirably increase a coefficient of dynamic friction and/or increase the tension of the tape which is exerted during the running of the tape. Especially, the increase of the tension entails a greater pulling force exerted on the tape, causing the tape to be elongated only at one side thereof and to be damaged at edge portions such as by guide posts of the system.

With the magnetic tape whose surface roughness is decreased, the magnetic layer should be a coating film which has high strength and should have good durability and a low coefficient of friction. To this end, the resin binder used has to be satisfactorily cured and good lubricating properties should be imparted to the magnetic layer.

If the curing treatment is effected immediately after formation of the magnetic layer, the surface profile or configuration on the opposite side of a non-magnetic support such as a polymer film is transferred to the magnetic layer. Moreover, if the curing is effected after formation of the magnetic layer and a back coat layer, the surface profile of the back coat layer is transferred. In either case, the reduced surface roughness of the magnetic layer obtained immediately after the calendering cannot be maintained as it is. To solve the above transfer problems, attempts have been recently made wherein the surface roughness of the non-magnetic support or the back coat layer is appropriately controlled to mitigate degradation of the surface roughness of the magnetic layer or wherein the degree of the transfer of the surface profile accompanied by the curing procedure is reduced by improving the thermal shrinking characteristic of the non-magnetic support. Alternatively, resin binders which can be cured at high speeds without resorting to thermal curing treatment are used to cure the magnetic layer prior to the transfer of the profile.

In general, however, non-magnetic supports should have irregularities on the surface thereof, which contact a running mechanism, in order to ensure good runnability. For instance, in Japanese Laid-open Patent Application No. 61-68727, there is proposed a base film wherein the height of surface projections or irregularities and the area density are suitably controlled. This may mitigate the degree of the transfer of recesses on the surface of the magnetic layer after calendering but does not suppress such a transfer to a satisfactory extent.

For improving thermal shrinkage characteristics of non-magnetic supports, polyethylene naphthalate (PEN) films and aramide films which have excellent heat and mechanical characteristics have been studied for use in place of known polyethylene terephthalate (PET) films as proposed, for example, in Japanese Laid open Patent Application Nos. 60-15436 and 62-113529. However, although the thermal shrinkage is improved, a continuous film-shaped medium is rolled up whereupon certain tension and nip pressure are exerted on the rolled medium, causing the surface roughness to be transferred to the magnetic layer. This is not prevented

EP 0 487 334 B1

by the improvement of the thermal shrinkage.

From the curing standpoint, Japanese Laid-open Patent Application No. 62- 97132 proposed use of electron beam-curable resins as a binder wherein immediately after calendering, such a binder is cured. Existing techniques of applying such electron beam-curable resins with regard to the magnetic paint dispersion and the calendering are significantly inferior to those of thermosetting resins. This results in unsatisfactory recording and reproducing characteristics when ultrafine magnetic particles suitable for high density recording are applied in combination with such beam-curable resins.

Aside from the above problems involved in the prior art techniques, attention should be paid to the fact that lubricants in the magnetic layer are very likely to be diffused in or migrated to the non-magnetic support or back coat layer through projecting contact points between the magnetic layer and the support or back coat layer. This will cause friction and sliding characteristics to be considerably degraded.

For improving the properties of the magnetic layer, studies have been made wherein the amount of lubricants in the magnetic layer is increased or lubricating materials are applied for overcoating after curing of the magnetic layer. However, these studies have not been successful because the curability is worsened or the film strength is lowered due to the plasticising action of the lubricant.

In a most advanced attempt as set forth, for example, in Japanese Laid-open Patent Application No. 1-316266, different surface profiles are used in opposite sides of a base film, thereby improving runnability of the film. In this instance, attention is directed only to the runnability, but the surface roughness of the magnetic layer may be reduced.

It is accordingly an object of the invention to provide an improved magnetic recording tape which is more suitable for high density recording.

It is a further object of the invention to provide a method for fabricating such a magnetic recording medium.

According to one aspect of the invention there is provided a magnetic recording tape comprising a non-magnetic support and a magnetic layer, the magnetic layer comprising a magnetic powder and a lubricant dispersed in a cured binder resin, and being formed on one side of the non-magnetic support, said tape having a total thickness of up to 20.0 $\mu$m, preferably 4 to 20 $\mu$m, said magnetic layer having a root mean square surface roughness of between 2.0 nm and 5.5 nm when determined by a non-contact optical surface roughness analyzer and a height from a level corresponding to the three-dimensional average level to a maximum recess of said magnetic layer of between 8 and 25 nm, said magnetic layer having a coefficient of friction of not larger than 0.25, the solubility of the binder resin in tetrahydrofuran being no greater than 4.5% by weight of said magnetic layer.

Preferably the total tape thickness is greater than 4.0 $\mu$m.

In order to realize the tape having such characteristics as set forth above, there is preferably used a non-magnetic support which has, at least on one side thereof, such a surface profile that when the surface profile is measured at not less than 10 sample areas, each of 50 $\mu$m x 50 $\mu$m, and a surface of the non-magnetic support is cut along a plane parallel to the three-dimensional average level, at the level at which the sum of sectional area is 0.8% of the total measured sectional area, the average height of projections above the horizontal plane being not greater than 50 nm and the number of the projections within a sample which are cut at that level being between 20 and 100. In this case, the magnetic layer is formed on the opposite side if only one side is as defined above.

The surface profile may be established when a base film is prepared as set forth in Japanese Laid-open Patent Application 1-316266 or by forming a coating layer on a base film.

With the coating layer, a uniform dispersion of inorganic particles having a size of from 0.03 to 0.20 $\mu$m in a resin binder is applied on a non-magnetic support in a thickness of from 0.03 to 2.0 $\mu$m on one side of the support. By this, the support has such a surface profile as defined above.

According to a second aspect of the invention, there is provided a method of fabricating a magnetic recording tape comprising:

providing a non-magnetic support;

applying a magnetic paint comprising a curable resin binder, a lubricant and magnetic particles to one side of the non-magnetic support to form a magnetic layer;

drying and calendering the magnetic layer; and

curing said magnetic layer in contact with the other side of said non-magnetic support so that the magnetic layer has a coefficient of friction not greater than 0.25 and the solubility in tetrahydrofuran of binder resin being not more than 4.5% by weight of the magnetic layer, so that said non-magnetic support has a surface with a profile such that when measured at not less than 10 sample areas, each of 50 $\mu$m x 50 $\mu$m, the surface of the non-magnetic support being cut along a plane parallel to the three-dimensional average level at a level when the sum of sectional area of projections is 0.8% of the total measured sectional area, the average height of the projections above the section plane is not larger than 50 nm, the number of projections sectioned in a

EP 0 487 334 B1

sample area being between 20 and 100.

The non-magnetic support should have such a surface profile on the opposite side as defined above. By this, the magnetic layer is not roughened during the course of the curing. As stated above, the surface profile may be established by formation of a coating layer on one side of the non-magnetic support. Alternatively, the non-magnetic support itself may be produced to have such a surface profile on at least one side thereof. In the latter case, if the production of a non-magnetic support having a surface profile defined above only one side of the support is technically difficult or troublesome, such a profile may be formed on opposite sides of the support. This is because the magnetic layer is smoothed by calendering.

It will be noted that the binder resin used for this purpose should be curable in nature and the curing treatment essentially required to ensure good durability of the tape is effected after calendering of the magnetic layer, under which the magnetic layer is in contact with the at least one side or the coating side of the above embodiments.

Since the curing is effected in a rolled condition wherein the magnetic layer is in contact with the opposite side of the non-magnetic support, this method is very advantageous from the standpoint of economy and production efficiency.

With the invention magnetic recording tape of the coated type may be provided which has an appropriately controlled surface smoothness of a magnetic layer essentially required for high density recording while maintaining good running and durability characteristics.

The invention will further be understood from the following description, when taken together with the attached drawings, which are given by way of example only, and in which:-

Figs. 1a to 1d are, respectively, schematic surface profiles of a calendered magnetic layer, a coating layer of fine particles of titanium oxide in contact with the magnetic layer, a portion which is above a plane corresponding to a level of 0.8% of the total measured sectional area, and a final tape product;

Figs. 2a to 2d are similar to Figs. 1a to 1d but are those profiles obtained according to a prior art method; and

Fig. 3 is a schematic view illustrating a level corresponding the sum of sectional areas of projections cut along the level being 0.8% of the total sectional area of a measured portion.

The magnetic tape according to the invention has a reduced surface roughness suitable for high density recording along with good running and durability characteristics. As stated hereinbefore, the tape has a non-magnetic support and a magnetic layer comprised of a dispersion of magnetic particles and a lubricant uniformly dispersed in a cured resin.

The non-magnetic support may be made of plastic resins ordinarily used for this purpose and including polyethylene terephthalate, polyethylene naphthalate, polyamides, polyimides and the like. The support is in the form of a film. The film support may be shaped for use as home or business video tapes with 1/2 inch, 3/4 inch and 8 mm in width and audio tapes with a width of 3.8 mm or like.

The magnetic layer is formed in a thickness of from 0.2 to 5.0 $\mu$ m provided that the total thickness of the tape is in the range of from 4.0 to 20.0 $\mu$ m as defined hereinafter. The magnetic particles are those particles which are ordinarily used for this purpose and include, for example, particles of metals or alloys such as iron, cobalt, nickel, manganese and the like, and metal oxides, carbides and nitrides such as $\gamma$-iron oxide ($\gamma$-Fe$_2$O$_3$), chromium oxide (CrO$_2$), iron carbide (FeC), iron nitride (FeN), and the like. Preferably, needle-shaped particles are used in view of their magnetic characteristics, as is known in the art. These particles have preferably a size of from 0.10 to 0.50 $\mu$ m along the major axis of the particle.

Besides, barium ferrite may also be used. The barium ferrite is in the form of plate-shaped particles with a hexagonal surface which exhibit magnetic characteristics different from those of the needle-shaped particles. The size ranges from 0.20 to 0.08 $\mu$ m.

The binder resin should be curable in nature and should be selected while taking into account solubility in tetrahydrofuran after curing as defined hereinafter. The binder resins may be those materials which show thermosetting or reactive properties. Examples of such binder resins include thermosetting resins such as polyurethanes, urethane elastomers, polyether-polyurethanes, diphenyl carbonate-polyurethane and the like. These resins may be used singly or in combination. In order to ensure good durability, polyurethane mixtures having different molecular weights of ranging from 3,000 to 100,000 are preferably used. As a matter of course, thermoplastic resins such as polyvinyl chloride, polyvinyl acetate, vinyl acetate-vinyl chloride copolymers, cellulose derivatives, polyamide resins, and mixtures thereof may be added to the thermosetting resin in order to impart desired properties to the magnetic layer. The mixing ratio of the thermosetting resins and the thermoplastic resins is not critical provided that the curability is not significantly impeded. For curing, curing agents such as isocyanate compounds are used particularly for polyurethanes and any known curing agent may be used depending on the type of binder resin.

The magnetic particles and the binder resin are applied in the form of a dispersion, for which solvents for

4

the binder resins are used. Examples of the solvent include ketones such as methyl ethyl ketone, acetone, methyl isobutyl ketone, cyclohexanone and the like, alcohols such as methanol, ethanol, propanol, butanol and the like, esters such as methyl acetate, ethyl acetate, butyl acetate and the like, aromatic hydrocarbons such as benzene, toluene, xylene and the like, and mixtures thereof.

The mixing ratio between the magnetic particles and the curable binder resin is not critical and may vary depending the type of resin and the purpose. In general, several to several tens percent of the resin is used on the basis of the total of the resin and the particles.

Aside from the magnetic particles and the binder resin, lubricants are used in amounts sufficient to control a coefficient of friction of the magnetic layer within a range of not larger than 0.25. Typical examples of the lubricant include higher fatty acids or esters thereof such as stearic acid, myristic acid, lauric acid, behenic acid and the like, esters thereof such as N-butyl stearate, 2-ethylhexyl stearate and the like. In addition, silicone oils, fluorine-containing oils and the like may also be used. These lubricants are known in the art and are not further described herein.

Abrasives or wear-resistant agents which are ordinarily used for this purpose may be further added. Typical examples include particles of alumina, carbon black, red oxide ($\alpha$-$Fe_2O_3$), chromium oxide ($Cr_2O_3$), silicon carbide, diamond, corundum, graphite, molybdenum disulfide, tungsten disulfide and the like. These particles should preferably have a size of from 0.1 to 0.8 $\mu$m while taking into consideration the surface profile of the magnetic layer.

The magnetic tape of the invention is characterized in that the total thickness of the tape is in the range of from 4.0 to 20.0 $\mu$m, the root mean square surface roughness of the layer is in the range af 2.0 to 5.5 nm when determined by a non-contact optical surface roughness analyzer and the maximum recess in the layer surface from the average level is from 8 to 25 nm. In addition, the coefficient of friction of the magnetic layer is not larger than 0.25, and the amount of resin binder being dissolved in tetrahydrofuran out of the magnetic layer is not larger than 4.5 wt%.

If the tape thickness exceeds the above range, the tape is unlikely to run smoothly because of the stiffness of the tape. This will result in poor matching with recording and reproducing apparatus. In addition, when the tape is rolled up, the compactness of the tape roll is impeded, thus being not suitable for high density recording.

On the other hand, too thin a magnetic tape is disadvantageous in that the tape is more liable to break during use. Where such a thin tape is so set as not to be broken down, recording and reproducing operations do not proceed smoothly. If the strength of the tape can be increased, a thin tape whose thickness is smaller than the above range may be used.

When the root mean square surface roughness is within the above range, an error rate characteristic for digital signals or a dropout characteristic for analog signals is not impeded. The depth from the average level of the deepest recess of the layer surface is determined for the following reasons. It has been found that when the value exceeds 25 nm, the coefficient of friction is increased. This is because recesses having a depth exceeding 25 nm in the magnetic layer are formed by transfer from the opposite side, whereupon the lubricant in the layer is diffused by contact with corresponding projections on the opposite side during the transfer.

On the other hand, the lower limit is determined as follows. A value of 8 nm is within an irregularity range of the surface formed after calendering of the magnetic layer. Accordingly, such a recess cannot be identified as an undesirable one.

If the coefficient of friction is outside the above range, an undesirable tension is exerted on the tape, resulting in undesirable runnability.

Moreover, the resin dissolution in tetrahydrofuran is defined as a factor for crosslinkage of the curable resin. For the determination of the dissolution of the resin of the magnetic layer in tetrahydrofuran, commercial magnetic tapes and tapes which were fabricated using different types of curable resins and different curing conditions were subjected to a running test under severe conditions of 40°C and 80% R.H. As a result, it was found that there was the interrelation between the durability and the dissolution in tetrahydrofuran. Good durability is obtained when the amount of the resin dissolved out in tetrahydrofuran is not larger than 4.5 wt% of the magnetic layer.

The fabrication of the magnetic tape according to the invention is described. In the fabrication method of the invention, it is essentially required that the magnetic layer be cured in contact with the opposite side of a non-magnetic layer.

In the method, a non-magnetic support having a specific type of surface profile at least one side thereof is initially provided. The surface profile is defined as follows. When the surface profile is measured at not less than 10 portions of the support, each having an area of 50 $\mu$m x 50 $\mu$m, and the support surface is cut along a plane horizontal to a three-dimensional average level, a distance from a level, which corresponds to the sum of sectional areas of projections from the level being 0.8% of a total sectional area of an intended cut portion, to a maximum apex among the projections above the level, is not larger than 50 nm as an average value of the total measurements and that the number of projections within a field of the measured portion which is cut off at the level corresponding to 0.8% of the total sectional area is in the range of from 20 to 100.

Such a surface profile may be established by formation of a coating layer on one side of the non-magnetic support. Alternatively, the non-magnetic support itself may be produced to have such a surface profile on at least one side thereof.

The formation of the coating layer which provides the surface profile as defined above on one side of the non-magnetic support is described, for example, in Japanese Laid-open Patent Application No. 2-208039. More particularly, a magnetic paint comprising a resin binder and fine particles is applied onto one side of the non-magnetic support in a dry thickness of from 0.2 to 50 $\mu$m. The resin binders may be thermoplastic resins such as acrylic resins, polyester resins, acrylic-ester resins, cellulose derivatives and the like. The fine particles include organic particles such as of polystyrene, polymethyl methacrylate, methyl methacrylate copolymers, polytetrafluoroethylene and the like, and inorganic particles such as silica, alumina, titanium dioxide, talc, graphite, calcium carbonate, carbon black and the like. The size of the particles is in the range of not larger than 0.15 $\mu$ m. The coating layer is formed in an amount of 0.001 to 1 g/m$^2$ as a solid content.

On the other hand, the non-magnetic support of the type which is provided with such a surface profile as defined above is described, for example, in Japanese Laid-open Patent Application No. 1-316266. More particularly, such a support can be obtained by laminating two types of polymer films such as polyethylene terephthalate films. One type of film used is substantially free of any inorganic particles and the other type includes uniformly dispersed particles such as carbon black having a small average size, for example, of 0.2 $\mu$ m in small amounts, for example of 2 wt%. By this, the resultant composite film has a smooth surface on one side and a slightly roughened surface on the other surface. Proper control of the amount and the size of the particles ensures the surface profile defined hereinabove.

The surface profile defined in the present invention is determined by means of a non-contact optical three-dimensional surface profile analyzer. It is necessary that the minimum lateral dissolution be sufficient to correctly detect projections which are formed on the surface of the coating layer or the support for the purpose of controlling the surface profile. The lateral dissolution should preferably be not larger than 0.6 $\mu$m x 0.6 $\mu$m.

Non-contact optical surface profile analyzers which meet the above requirement include, for example, "TOPO-3D" using a 70 or more power objective and available from WYKO Inc., Hi-resolution-type "TOPO-3D" having a high density DDC and a 40 or more power objective is available from WYKO Inc., and "MAXTM-3D", using a 100-power objective, from ZYGO Inc. Needless to say, aside from these analyzers, any non-contact optical surface profile analyzers having similar performance may be likewise used. By using these analyzers, a three-dimensional configuration of fine irregularities on the surface of a magnetic tape and the surface which contacts the magnetic layer over a long time during magnetic tape fabrication process can be precisely detected without breakage of the irregularities.

It has been found that when the surface profile is measured by the method using the profile analyzer and a projection configuration on one side of the non-magnetic support which contacts the magnetic layer when rolled is cut along a horizontal plane based a three-dimensional average plane, only projections above the level corresponding to 0.8% of the total sectional area have the possibility of being transferred to the magnetic layer. Based on this finding, a projection configuration or surface profile of the surface contacting the magnetic layer is so determined as to give little influence on read/write characteristics of the magnetic layer and to suppress migration of lubricants from the magnetic layer to a minimum.

Better results are obtained when the root mean square surface roughness of the magnetic layer obtained after calendering is in the range of from 2.0 to 6.0 nm when determined by the non-contact measuring method. This is because if the magnetic layer is calendered so that the surface roughness of the magnetic layer is in the range of 2.0 to 6.0 nm, the peak-to-valley value on the surface becomes very small. In other words, such a surface is very smooth. The very smooth surface is more likely to suffer transfer of a surface profile of the opposite side. If the surface profile of the opposite side is severely controlled as in the present invention, better results are obtained.

The contact points which will cause transfer of the configuration also serve as diffusion paths through which the lubricant in the magnetic layer diffused or migrated, thereby considerably impeding the running characteristic by combination with the smooth magnetic layer.

In order to minimize the surface roughness of the magnetic layer which has been transferred with the surface profile of the opposite side which is contacted with the magnetic layer under tension arid also to minimize the contact area between the magnetic layer and the opposite side, it is essential that the distance of from a level at which the sum of the sectional areas of projections cut along the level is 0.8% of the total sectional area of a measured portion, to the apex of the highest projection is not larger than 50 nm as an average of all the measurements. It is also essential that the number of projections within the field of the measured portion cut at the 0.8% level be in the range of from 20 to 100 as an average of all the measurements.

The reason why the level of the projections and the area density are, respectively, taken as an average of all measurements is that even if the distance is larger than 50 nm or the number of the projections is outside the above range at one or more portions for the measurement, such a surface profile is within the scope of the invention provided that average values are, respectively, within the defined ranges. Moreover, the reason why at least ten portions are measured is that the medium of the invention is intended to be distinguished from those mediums which have the same surface profile as defined above incidentally only at a part of a non-magnetic support at one side thereof.

The surface properties as defined above are imparted to one side of the non-magnetic support which is not formed with a magnetic layer. Accordingly, when the magnetic layer is thermally cured by ordinary techniques in a rolled condition, the recesses of the magnetic layer caused by the transfer of the surface profile or configuration from the opposite side do not impede read/write characteristics in high recording density regions, an error rate characteristic for digital signals and dropout characteristics for analog signals. Moreover, such surface properties have the function of suppressing, to a minimum, the diffusion or migration of a lubricant of the magnetic layer in the opposite side which contacts directly with the magnetic layer.

Preferably, the root mean square surface smoothness of the opposite side which is free of the magnetic layer and which is determined by the non-contact optical surface analyzing method is in the range of from 3 to 20 nm as an average of the total measurements.

This is because when the surface roughness is less than 3 nm, such a mirror finished condition makes it difficult to ensure the number of contacting projections of from 20 to 100. Likewise, over 20 nm, the distance between the level corresponding to 0.8% in total of sectional areas and the apex of the highest projection of not larger than 50 nm is difficult to attain on average.

Further, in order to attain reliability of the elongated tape such as a magnetic tape, the standard deviation of the root mean square surface roughness of the side which contacts the magnetic layer should preferably be not larger than 5.0 nm.

In a subsequent step of the fabrication method of the magnetic tape, a magnetic paint comprising a curable resin binder, a lubricant and magnetic particles is applied to a side opposite to the at least one side to form a magnetic layer in a dry thickness as defined with respect to the magnetic tape. Preparation of the paint may be made by any known technique using various types of mixers or kneaders such as a Henschel mixer, a dissolver, planetary mixers, press kneaders, continuous kneaders, biaxial kneader extruders, three roll mills, stone mills, pin mills, sand mills and the like.

The magnetic paint is applied onto the non-magnetic support by known coating techniques using gravure coaters, air doctor coaters, blade coaters, kiss coaters, die coaters and the like.

Immediately after the application of the paint, the magnetic particles are usually subjected to orientation, for example, by application of a DC magnetic field from outside along the machine direction. Preferably, a magnet capable of generating a magnetic field which is larger than the coercive force of the magnetic particles used is employed for the orientation. For instance, an orientation device using a magnetic field generator in the form of a solenoid coil as disclosed in United States Patent No. 3,256,112 has been widely used for this purpose.

After completion of the orientation, the layer is gently dried at a temperature of from 40 to 150°C, preferably from 70 to 100°C so that the oriented particles are prevented from returning to the initial non-oriented state. The drying is effected such as by feeding hot air through nozzles to such an extent that surface roughness is not caused by abrupt drying of the layer but the orientation is fixed.

The thus dried layer is calendered to make a mirror finish. The calendering is effected by passing the tape through rolls at a temperature of from 60 to 120°C, preferably from 70 to 100°C, and at a linear pressure of from 200 to 600 kg/cm, preferably from 350 to 550 kg/cm.

By the calendering, the magnetic layer has substantially such a surface profile as defined hereinbefore.

Finally, the magnetic tape which has been rolled obtained after the calendering is subjected to curing under temperature and time conditions sufficient to cure the binder resin. Usually, the curing temperature ranges from 30 to 100°C and the time ranges from 4 to 60 hours. In the rolled state, the recording layer is invariably contacted with the opposite side of the tape. The opposite side should have the surface profile defined hereinbefore. When the rolled tape is tightened as a result of the curing of the magnetic layer or is exerted with a tension or a nip pressure during a takeup process of the tape, the magnetic layer undergoes the transfer of the surface profile of the opposite side. Since the opposite side has a surface profile as defined before, the calendered surface of the magnetic layer is substantially kept without suffering an undesirable influence from the opposite side. In addition, since the contact area between the magnetic layer and the opposite surface is so small that the lubricant in the magnetic layer is unlikely to be diffused in or migrated to the opposite side. Thus, the final magnetic layer has a reduced surface roughness without impeding intended running characteristics and also has good durability.

The fabrication method of the invention can solve serious problems involved in prior art. More particularly, the magnetic layer with a significantly improved smoothness or surface roughness which is particularly suitable for high density recording and which will not be attained in prior art is realized without involving degradation of running characteristics owing to the increase in true contact area between the magnetic layer and the opposite side. The degradation of the surface roughness due to the transfer of surface configuration, which will occur during the course of curing of the magnetic layer and the degradation of the frictional characteristic owing to the diffusion of lubricants, can suitably prevented.

If necessary, a back coat layer may be formed on a side opposite to the magnetic layer as will be particularly described in examples and comparative examples.

The present invention is more particularly described by way of examples. Comparative examples are also described.

A fundamental procedure of making a magnetic tape used in examples and comparative examples is first described.

Metal tape samples which are based on the standards for a 90 minutes long tape (total thickness of 13.5 $\mu$ m) adapted for MII-VTR were fabricated.

A formulation of a magnetic layer is shown in Table 1 below.

### Table 1

| | |
|---|---|
| Magnetic metal particles | 100 parts by weight |
| Resin binder | 20 parts by weight |
| Alumina particles | 6 parts by weight |
| Carbon black | 1 part by weight |
| Aliphatic lubricant | 4 parts by weight |
| Curing agent | 4 parts by weight |

The magnetic metal particles are particles of an Fe alloy containing Co, Ni, Mn, Al and Co in small amounts. The particles were selected from those which have been developed and employed for next generation VTR and which are readily available. The characteristic properties of the metal particles are shown in Table 2 below.

### Table 2

| | |
|---|---|
| BET specific surface area($m^2$/g) | 52 |
| Coercivity (Hc) (KA/m) | 125.4 |
| Saturation magnetization (Is) (emu) | 128 |
| Major axial length ( $\mu$ m) | 0.150 |
| Axial ratio | 10 |

The resin binder used was a mixture of four resins which exhibits standard characteristics when used as a binder for video tapes. The amounts and types of the respective resins were determined as most excellent in view of the the tensile strength of the film of the mixture with and without mixing with the magnetic particles. The amounts and types are shown in Table 3 below.

Table 3

| | Resin | Weight Average Molecular Weight | Degree of Polymer- ization | Mixing Ratio* |
|---|---|---|---|---|
| a | vinyl chloride resin | 14,000-20,000 | 280 - 340 | 10 |
| b | polyurethane | 50,000-70,000 | - | 5 |
| c | polyurethane | 40,000-80,000 | - | 4 |
| d | polyurethane | 30,000-40,000 | - | 1 |

* Mixing ratio: ratio by weight based of the weight of the magnetic particles taken as 100.

It will be noted that the resin (d) is used for pre-mixing or pre-dispersion of alumina.

Alumina was used as an abrasive and had a size of from 0.10 to 0.30 $\mu$ m and a BET specific surface area of from 9 to 15 $m^2$/g. As stated above, alumina was preliminarily dispersed in 1 part by weight of the resin (d) in a dispersion mill at an appropriate viscosity.

19 parts by weight of the remaining resin binders were added for mixing with or pre-dispersion of the magnetic particles.

Carbon black was added for wear resistance and conductivity and was one which had a primary particle size of from 200 to 300 angstroms.

The aliphatic lubricant was a mixture of three compounds which were usually employed in magnetic recording mediums. The types and mixing ratios are shown in Table 4.

Table 4

| | |
|---|---|
| Myristic acid | 2 parts by weight |
| Stearic acid | 1 part by weight |
| N-butyl stearate | 1 part by weight |

Mixing ratio: ratio by weight based on the weight of the magnetic particles taken as 100.

The curing agent was an isocyanate compound with three functional groups ordinarily used for this purpose.

The above ingredients were used to prepare a magnetic paint according to the following procedure.

The magnetic metal particles, carbon black and a mixed solvent of methyl ethyl ketone,toluene and cyclohexanone at ratios by weight of 3:3:1 were agitated in a mixer for one hour to permit the particles to be sufficiently wetted with the solvent. Thereafter, while resins (a), (b) and (c) and an appropriate amount of the mixed solvent were added to the mixer, the mixture was agitated for further 5 hours to obtain a dispersion of the particles. While the mixture was adjusted in viscosity several times, it was kneaded for 4 hours in total.

After dilution of the magnetic mixture, it was dispersed to a satisfactory extent in a sand mill of the type ordinarily used for paint dispersion. After completion of first dispersion in the sand mill, an alumina paste which had been separately dispersed in the resin (d) was added to and agitated in the magnetic dispersion, followed by secondary dispersion in the sand mill.

The resultant magnetic metal paint stock was further mixed, under agitation, with a lubricant solution and the curing agent immediately before coating to obtain a final magnetic paint.

The magnetic layer was formed by continuously applying the magnetic paint onto an elongated film by a gravure coater. Immediately, the applied film was subjected to orientation treatment by application of a DC magnetic field along the machine direction. By this the magnetic particles were oriented in the machine direction. Thereafter, the oriented layer was dried with hot air being fed from nozzles at a temperature of 70°C so that the orientation of the magnetic particles was fixed. The drying was effected to such an extent that the layer was not abruptly dried to prevent the surface from being roughened. Subsequently, the dried layer was calendered for mirror finish at a linear pressure of 400 kg/cm and at a temperature of 90°C.

Some samples obtained in examples and comparative examples were thermally cured in a hot chamber. In comparative examples where the curing step was omitted, no curing treatment was performed. In a comparative example, after formation of a back coat layer, the magnetic layer was thermally cured at a temperature corresponding to 60% of an ordinary curing temperature for one month.

Where a back coat layer was formed, a paint was obtained by dispersing a major proportion of carbon black with a size of 100 angstroms and a minor proportion of large-sized carbon black and an abrasive in nitro cellulose and polyurethane. The paint was continuously applied by means of a gravure coater to form the back coat layer. The back coat layer was formed after curing of the magnetic layer with some exceptions.

The thus fabricated samples were each slit into 1/2 inch wide rolls.

Example 1

A 10 $\mu$ m thick polyethylene terephthalate film having different surface profiles on opposite sides thereof was provided as a non-magnetic support. One side on which the magnetic layer was formed had such a surface profile as those of the grade used for hi-band 8 mm wide tapes or S-VHS tapes. The opposite side had a filler incorporated in larger amounts than the magnetic layer side, thereby increasing a density of projections on the surface. The size of the filler was properly selected to provide a surface profile as defined in the present invention. This procedure of producing this type of base film is described in Japanese Laid-open Patent Applicaton No. 01-316266.

The magnetic paint was applied onto the base film by the procedure while changing the calendering speed conditions, thereby obtaining samples with magnetic layers whose root mean square surface roughnesses are of 2 nm (Sample 1), 4 nm (Sample 2) and 6 nm (Sample 3).

Example 2

An improved polyethylene terephthalate film which is used for a vacuum deposition tape (ME tape) such as for hi-band 8 mm VTR was provided as a non-magnetic support. The base film had one side which was substantially free of any projection of a filler or had projections with a height as low as about 30 nm, if present, and on which a magnetic layer was to be formed. The one side had a mirror surface property of about 3 nm in terms or root mean square. In contrast, the opposite side was formed with projections made of fine inorganic particles in order to ensure good runnability in a vacuum deposition apparatus. The technique of preparing such a base film is described, for example, in Japanese Laid-open Patent Application No. 02-208039.

The magnetic paint was applied onto on the one side of the base film to provide Sample 4.

Example 3

A polyethylene terephthalate film which is used for a hi-band 8 mm tape and S-VHS tape was applied, on one side thereof, with a paint which was obtained by dispersing titanium oxide particles with a size of 0.03 $\mu$ m in a polymer binder solution. The paint was applied in different thicknesses, thereby forming coating layers having such a surface profile as defined in the invention. After the formation of the coating layer, a magnetic layer having a root mean square surface smoothness of 4 nm was formed on the opposite side of the film and cured. Subsequently, the back coat layer was formed on the titanium oxide layer to provide a magnetic tape. The tape having an average thickness of the titanium oxide layer of 0.03 $\mu$ m was provided as Sample 5, the tape with an average thickness of 0.5 $\mu$ m was provided as Sample 6, and the tape having an average thickness of 2.0 $\mu$ m was provided as Sample 7.

Example 4

A polyethylene terephthalate film which is used for a hi-band 8 mm tape and S-VHS tape was applied, on one side thereof, with a paint which was obtained by dispersing alumina particles with a size of 0.20 $\mu$ m in a polymer binder solution. The paint was applied in different thicknesses, thereby forming a coating layer having such a surface profile as defined in the invention. After the formation of the coating layer, a magnetic layer having a root mean square surface smoothness of 4 nm was formed on the opposite side of the film and cured. Subsequently, the back coat layer was formed on the alumina layer to provide a magnetic tape. The tape having an average thickness of the alumina layer of 0.2 $\mu$ m was provided as Sample 8, the tape with an average thickness of 1.0 $\mu$ m was provided as Sample 9, and the tape having an average thickness of 2.0 $\mu$ m was provided as Sample 10.

Comparative Example 1

A sample was prepared according to a prior art technique.

A polyethylene terephthalate film used for hi-band 8 mm tape or S-VHS tape was provided as a non-magnetic support, on which a magnetic paint was applied thereby forming a magnetic layer. The layer was thermally cured to provide Sample 11.

Comparative Example 2

The general procedure of Comparative Example 1 was repeated except that the curing was not effected, thereby obtaining Sample 12.

Comparative Example 3

The general procedure of Comparative Example 1 was repeated except that the curing after formation of the magnetic layer was not effected, but the tape was thermally treated for one month at a temperature corresponding to 60% of the curing temperature used in Example 1 after formation of the back coat layer, thereby providing Sample 13.

Comparative Example 4

The general procedure of Example 1 was repeated using the PET film with different surface profiles on opposite sides thereof except that the magnetic layer was very rough on the surface thereof with a root mean square surface roughness of 8 nm, thereby obtaining Sample 14.

Comparative Example 5

The general procedure of Example 1 was repeated except that the PET film used had, at an opposite side relative to the magnetic layer, a surface profile whose surface roughness was outside the scope of the invention, thereby obtaining Sample 15.

Comparative Example 6

The general procedure of Example 3 was repeated except that the average thickness of the coating layer containing titanium oxide particles was 3.0 $\mu$ m and that the magnetic layer was formed on a side opposite to the coating layer as having a root mean :square surface roughness of 4 nm, thereby providing Sample 16.

Comparative Example 7

The general procedure of Example 4 was repeated except that the average thickness of the coating layer containing alumina particles was 3.0 $\mu$ m and that the magnetic layer was formed on a side opposite to the coating layer as having a root mean square surface roughness of 4 nm, thereby providing Sample 17.

Typical samples thus obtained in the examples and comparative examples are illustrated with reference to the accompanying drawings.

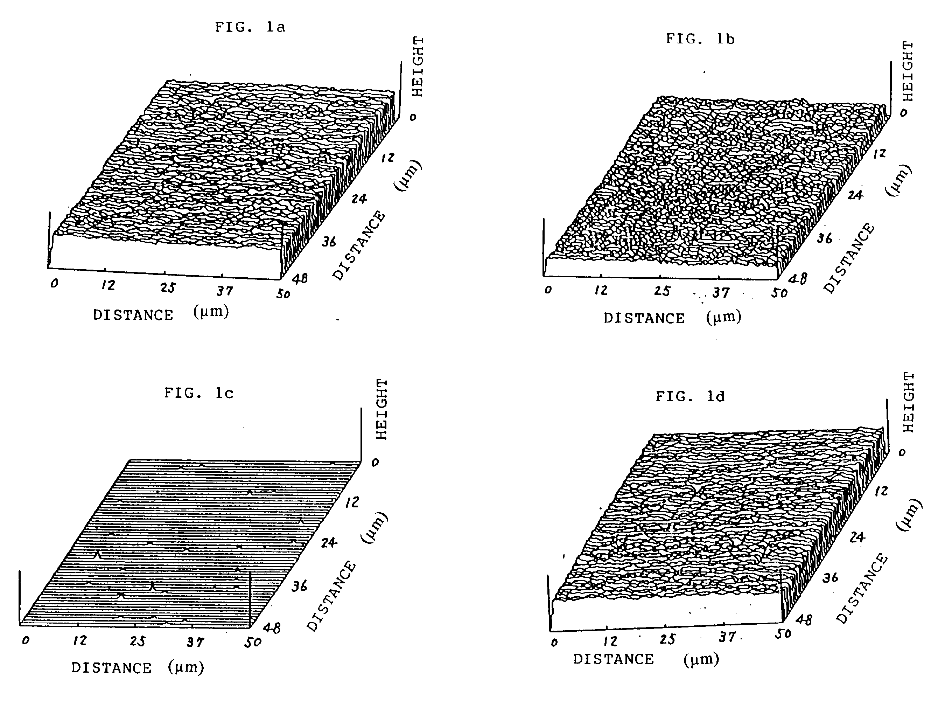

Fig. 1 shows a surface profile of Sample 5 obtained in Example 3. The surface profile was measured by means of TOPO-3D mounting a 200-power objective. Fig 1a shows a surface profile of the magnetic layer obtained after calendering, Fig. 1b shows a surface profile of a back side of the base film which contacts the magnetic layer when rolled, Fig. 1c shows a configuration at a portion higher than a level corresponding to or cut at 0.8%, in the sum of sectional areas, of the total sectional area measured, and Fig. 1d shows the magnetic layer of a final tape product.

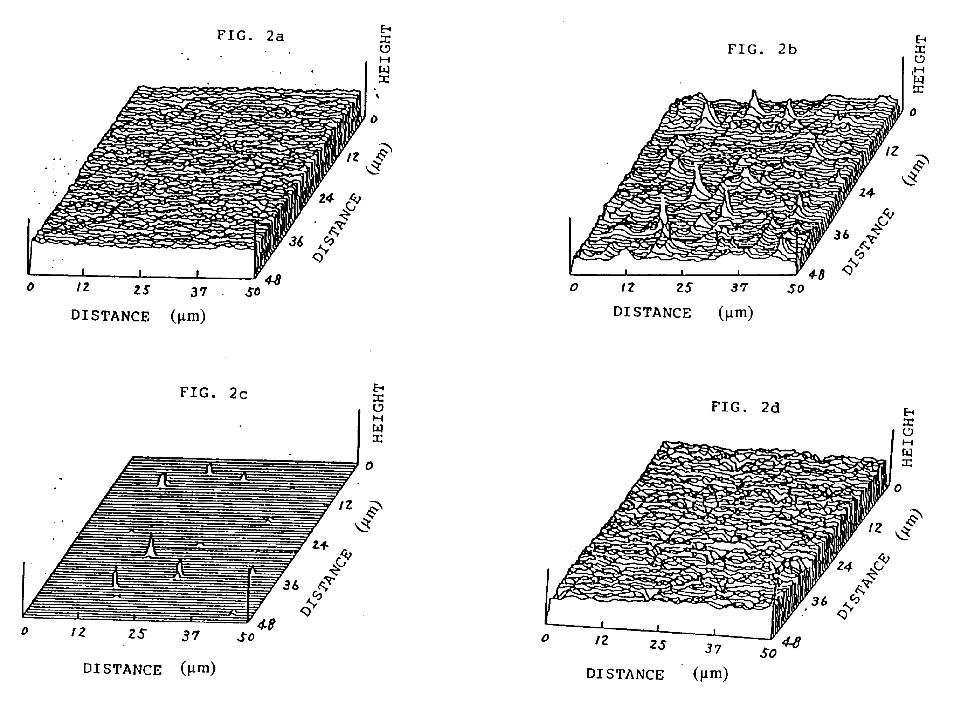

Fig. 2 shows a surface profile of Sample 11 obtained in Comparative Example 1. Fig 2a shows a surface profile of the magnetic layer obtained after calendering, Fig. 2b shows a surface profile of a back side of the base film which contacts the magnetic layer when rolled, Fig. 2c shows a configuration at a portion higher than a level corresponding to or cut at 0.8%, in the sum of sectional areas, of the total sectional area measured, and Fig. 2d shows the magnetic layer of a final tape product.

As will be apparent from these figures, Sample 10 has several great projections higher than the 0.8% level particularly shown in Fig. 2c. These projections are transferred to the final magnetic layer in the form of recesses. These recessed portions will apparently permit a greater gap relative to a magnetic head to be established than the magnetic layer surface formed immediately after the calendering. At the time of recording and reproduction, there is a great tendency to lose signals at the recessed portions.

With the sample of the invention, the difference in the distance between the 0.8% level and the apex of the projection is small. In addition, these projections are not concentrated at one portion within a field of the measured portion but are dispersed throughout the field. Accordingly, the final magnetic layer surface keeps a good surface condition without impeding the surface profile formed immediately after the calendering.

Aside from the above surface profiles, the respective samples were subjected to measurement of the following characteristics to determine lubrication characteristics and the effect of the curing reaction on the binder resin.

(1) Root mean square surface roughness (Rms) of the magnetic layer after calendering.

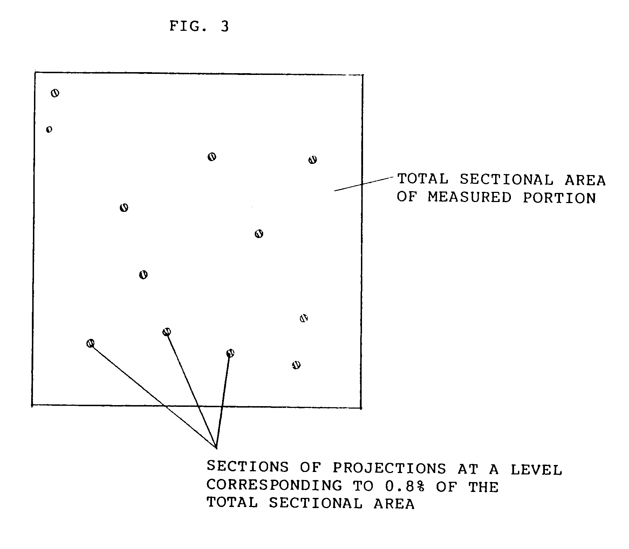

(2) With regard to the surface which contacts the calendered magnetic layer, a distance (P - H(0.8%)) of from a level, at which the sum of sectional areas of projections above the level becomes 0.8% of the total sectional area of a measured portion when the surface is cut along the plane horizontal to the three-dimensional average level, to an apex of the highest projection. The 0.8% level is intended to mean (the sum of sectional areas)/(total measured sectional area) x 100 = 0.8%. This is particularly shown in Fig. 3 in which the cut plane is viewed from the cut side. The sectional areas of projections which are higher than the 0.8% level are indicated as shaded circles for simplicity.

(3) With regard to the surface which contacts the calendered magnetic layer, the number of projections which are higher than the 0.8% level when the surface is cut along a plane horizontal to the three-dimensional average level (N(0.8%)).

(4) Root mean square surface roughness of the surface which contacts the calendered magnetic layer (Rms).

(5) Root mean square surface roughness or the magnetic layer of a final tape (Rms).

(6) Root mean square surface roughness as the deepest recess of the magnetic layer of a final tape (0-V value)

(7) Amount of the binder resin of the magnetic layer of a final tape dissolved out in tetrahydrofuran (wt%).

(8) Coefficient of friction of a final tape sample.

(9) Defects caused by running of the tape after measurement of the coefficient of friction.

(10) Difference in modulation noises at 6.5 MHz to 6.0 MHz when a 7 MHz signal is reproduced by means of MII video tape recorder ($\Delta$ 6.5-6.0: dB).

(11) Dropout defects at 3 $\mu$ s/-15 dB by determined by the use of MII video tape recorder (average value over 15 minutes).

The results of the above measurements are shown in Tables 5 and 6. The measurements (1) to (6) was made using TOPO-3D having a 200-power objective and an average value of the measurements at twenty portions is shown in Table 5 for the respective measurements.

The amount of the resin binder dissolved out in tetrahydrofuran in (7) was determined according to the following procedure.

A 1.5 m long x 1/2 inch wide magnetic tape sample was provided, from which the coating layer was removed from the side opposite to the magnetic layer. The thus removed sample was immersed in 20 ml of tetrahydrofuran contained in a bottle, followed by dissolution treatment for 30 minutes by the use of a ultrasonic vibrator. The sample was removed from the bottle. After settling of the separated layer down to the bottom, 10 ml of the supernatant liquid was taken out and evaporated to dryness. The weight of the resultant solid residue was doubled as an amount dissolved out. In order to eliminate the lubricant ingredient from this amount, the solid matter was subjected to gel permeation chromatography, from which the amount of the binder resin in the solid matter was calculated to obtain an amount of the resin dissolved out in tetrahydrofuran.

With regard to (8) and (9), the measurements were made using a drawing system. A sample tape was suspended on a SUS 304 post with a diameter of 6 mm. The tape was fixed at one end thereof with a reciprocating stage equipped with a strain gauge and was loaded with a weight of 20 g at the other end. In this condition, the stage was reciprocated, whereupon a sliding friction produced was measured by means of the strain gauge. When the coefficient of friction at the first pass was takes as $\mu_{k1}$ and that at the twentieth pass was taken as $\mu_{k20}$, the defects of the tape after the 20th pass were evaluated by five ranks in (7). Five ranks include "excellent or defect-free" as 5, "good" as 4, "moderate" as 3, "slightly poor" as 2, and "poor" as 1. The term "moderate" means no problem in actual applications.

With regard to (10) and (11), each sample was set in MII recorder to measure intended characteristics.

Especially, in (10), the modulation noises in the vicinity of carrier signals which are greatly influenced by the surface roughness were evaluated as a difference between 6.5 MHz and 6.0 MHz.

Table 5  Surface Properties

| Sample No. | Surface Profile (Average at 20 Points) (nm) | | | | | Maximum Recess on Magnetic layer of Final Tape (nm) |
|---|---|---|---|---|---|---|
| | Magnetic Layer After Calendering Rms | Surface Contacting Magnetic Layer | | | Magnetic Layer of Final Tape | |
| | | P-H(0.8%) | N(0.8%) | Rms | Rms | O – V Value |
| 1 | 2.0 | 38 | 24 | 34.0 | 2.3 | 11 |
| 2 | 4.0 | 42 | 29 | 34.1 | 4.2 | 18 |
| 3 | 6.0 | 43 | 27 | 34.6 | 6.1 | 24 |
| 4 | 4.0 | 9 | 38 | 5.8 | 4.1 | 20 |
| 5 | 4.0 | 14 | 33 | 6.1 | 4.1 | 19 |
| 6 | 4.0 | 17 | 26 | 5.3 | 4.0 | 19 |
| 7 | 4.0 | 18 | 23 | 5.7 | 4.0 | 17 |
| 8 | 4.0 | 32 | 29 | 23.4 | 4.2 | 18 |
| 9 | 4.0 | 29 | 24 | 21.9 | 4.1 | 17 |
| 10 | 4.0 | 25 | 26 | 17.9 | 4.1 | 17 |
| Comparison: | | | | | | |
| 11 | 4.0 | 97 | 14 | 9.1 | 7.8 | 67 |
| 12 | 4.0 | 95 | 16 | 8.8 | 6.2 | 52 |
| 13 | 4.0 | 98 | 19 | 9.2 | 9.2 | 163 |
| 14 | 8.0 | 42 | 28 | 34.9 | 8.4 | 74 |
| 15 | 4.0 | 73 | 24 | 43.6 | 5.6 | 46 |
| 16 | 4.0 | 17 | 21 | 5.3 | 4.8 | 23 |
| 17 | 4.0 | 26 | 24 | 16.8 | 4.4 | 22 |

Table 6

| Sample No. | Amount of Binder Dissolved Out In THF (wt%) | Running Characteristics | | Coefficient of Defects | MII Deck Characteristics | |
|---|---|---|---|---|---|---|
| | | Coefficient of Friction | | | | |
| | | $\mu_{k1}$ | $\mu_{k20}$ | | Modulation Noise ($\Delta$ 6.5-6.0 MHz)(dB) | Drop-out 3 $\mu$ s/ -15 dB) |
| 1 | 2.8 | 0.20 | 0.24 | 4 | 1.0 | 1.2 |
| 2 | 2.7 | 0.18 | 0.21 | 4 | 1.6 | 1.3 |
| 3 | 2.8 | 0.15 | 0.18 | 5 | 2.1 | 2.4 |
| 4 | 2.9 | 0.18 | 0.20 | 5 | 1.5 | 2.0 |
| 5 | 2.8 | 0.17 | 0.19 | 4 | 1.5 | 1.5 |
| 6 | 2.7 | 0.18 | 0.18 | 4 | 1.4 | 2.3 |
| 7 | 2.9 | 0.16 | 0.19 | 5 | 1.5 | 2.4 |
| 8 | 2.8 | 0.17 | 0.20 | 4 | 1.6 | 1.8 |
| 9 | 2.7 | 0.19 | 0.22 | 4 | 1.5 | 2.1 |
| 10 | 2.6 | 0.18 | 0.21 | 5 | 1.5 | 2.2 |
| Comparison: | | | | | | |
| 11 | 2.8 | 0.37 | 0.49 | 3 | 2.5 | 17.2 |
| 12 | 8.7 | 0.25 | 0.37 | 1 | 3.8 | 28.4 |
| 13 | 4.2 | 0.19 | 0.31 | 2 | 2.9 | 24.5 |
| 14 | 2.9 | 0.24 | 0.34 | 4 | 2.6 | 10.7 |
| 15 | 2.7 | 0.31 | 0.42 | 3 | 2.0 | 8.4 |
| 16 | 2.6 | 0.33 | 0.45 | 2 | 1.9 | 11.3 |
| 17 | 2.8 | 0.29 | 0.38 | 2 | 1.8 | 16.7 |

As will be apparent from the results of Table 5, with the samples 1 to 10 of the invention, the root mean square surface roughness values of the magnetic layers of the final tapes are not significantly varied as compared with those values of the magnetic layers after the calendering. The maximum recess, O-V value, of the final tapes is very small.

In contrast, the samples 11, 12 and 13 for comparison obtained by prior art processes cannot keep surface properties after the calendering and the root mean square roughness values of the magnetic layers of the final tapes are undesirably increased. With samples 11 and 12 wherein one is subjected to curing and the other is not subjected to curing, the increase of the surface roughness is considered to result from the transfer of the polyethylene terephthalate film surface profile. With sample 13, the surface profile of the back coat layer is transferred owing to the thermal treatment which is performed after formation of the back coat layer.

With sample 15 which has high projections with which the magnetic layer contacts and wherein the distance of from a level, at which the sum of sectional areas cut at a plane horizontal to the root mean square plane becomes 0.8% of the total sectional area, to the highest projection apex exceeds 50 nm, the magnetic tape of the final tape has a significantly greater surface roughness than sample 2 of Example 1 wherein the height of the projection is within the scope of the invention.

With regard to the amount of the binder resin dissolved out in THF, sample 12 for comparison wherein the curing is omitted is greater in the amount. Sample 13 wherein the long-term thermal treatment is effected after formation of the back coat layer and the other ordinarily cured samples are lower in the amount.

The coefficients of friction and frictional defects are described.

Samples 1 to 10 of the invention have $\mu_{k1}$ values as small as not larger than 0.20. The variations between $\mu_{k1}$ and $\mu_{k20}$ are less than 0.05. The defects after the twentieth pass are evaluated as 4 or 5. These results give evidence that the binder in the skin layer of the magnetic layer is reliably crosslinked by the curing in all the samples.

In contrast, with sample 11 for comparison, the values of $\mu_{k1}$ and $\mu_{k20}$ and the difference between $\mu_{k1}$ and $\mu_{k20}$ are all great. This is considered to result from the reduction of the lubricating effect owing to the diffusion and migration of the lubricant from the magnetic layer during the transfer of the surface profile of the

14

base film when the magnetic layer is cured. Since samples 12 and 13 are suppressed from diffusion and migration of the lubricant, the $\mu_{k1}$ value is low. However, defects are produced due to the low degree of crosslinkage of the skin layer in the magnetic layer. After the twentieth pass, the coefficient of friction is increased.

With sample 14 for Comparison which has the same structure as in Example 1 and which is fabricated in the same manner except for a greater surface roughness of the magnetic layer after calendering, the surface properties, the values of $\mu_{k1}$ and $\mu_{k20}$ and the difference between $\mu_{k1}$ and $\mu_{k20}$ are all inferior to those of Example 1. This is considered for the following reason: since the smoothness of the magnetic layer is not so good that even when the surface profile is precisely controlled, a contact pressure is partly increased at the time of curing. At the portions, the transfer of the surface profile and the diffusion and migration of the lubricant take place.

In sample 15 for comparison, the runnability is degraded corresponding to the transfer of the surface profile. With samples 16 and 17 for comparison wherein the coating layer containing fine inorganic particles are formed in a thickness as large as 3.0 $\mu$ m for contact with the magnetic layer during the course of curing, the coating layer cannot stand the contact pressure and undergoes elastic deformation owing to the great thickness. By this, the migration of the lubricant and the adhesion between the layers through the lubricant are very likely to occur. As a result, the surface properties of the magnetic layer, the values of $\mu_{k1}$ and $\mu_{k20}$ and the difference between $\mu_{k1}$ and $\mu_{k20}$ are all inferior to those of Examples.

The difference in the modulation noise is interrelated with the surface roughness and the samples of the invention all exhibit a better characteristic.

The dropout defects are varied in association with the O - V values relating to the maximum recess in the magnetic tape surface of the final tape. The significant difference between the tapes of the invention and the tapes for comparison will be apparent.

Thus, the magnetic tape of the invention keeps high runnability and good durability with respect to the sliding with contact parts while improving the smoothness of the magnetic layer. Moreover, in accordance with the method of the invention, the surface profile which contacts the magnetic layer during the course of curing is severely, precisely controlled, so that the magnetic tape is remarkably improved and is particularly suitable for high density recording. The improvement becomes more pronounced when the surface roughness of the magnetic layer after the calendering is smaller. The magnetic tape having good surface properties leads to an improvement in reproduced output in a high frequency region, the reduction of modulation noised in the vicinity of carrier signals and the reduction of the dropout defects. In addition, reliable head touch is ensured by the good runnability.

## Claims

1. A magnetic recording tape comprising a non-magnetic support and a magnetic layer, the magnetic layer comprising a magnetic powder and a lubricant dispersed in a cured binder resin, and being formed on one side of the non-magnetic support, said tape having a total thickness of up to 20.0 μm, preferably 4 to 20 μm, said magnetic layer having a root mean square surface roughness of between 2.0 nm and 5.5 nm when determined by a non-contact optical surface roughness analyzer and a height from a level corresponding to the three-dimensional average level to a maximum recess of said magnetic layer of between 8 and 25 nm, said magnetic layer having a coefficient of friction of not larger than 0.25, the solubility of the binder resin in tetrahydrofuran being no greater than 4.5% by weight of said magnetic layer.

2. A magnetic recording tape according to claim 1, wherein the side of said non-magnetic support remote from the magnetic layer has a surface profile such that when measured at not less than 10 sample areas, each of 50 μm x 50 μm, and a surface of the non-magnetic support is cut along a plane horizontal to the three-dimensional average level, the distance from a level at which the sum of sectional areas of projections is 0.8% of the total measured sectional area, to the highest apex among the projections above the horizontal plane is not larger than 50 nm as an average value of the total measurements, and that the number of projections within the measured portion at the level corresponding to 0.8% of the total measured sectional area is between 20 and 100.

3. A magnetic recording tape according to claim 1 or 2, wherein said surface profile is formed by coating a layer on the non-magnetic support, said coating layer comprising a dispersion of fine particles with a size of not larger than 0.15 μm in a resin.

4. A magnetic recording tape according to claim 1, 2 or 3, wherein said magnetic layer has a thickness of between 0.2 and 5 μm.

5. A method of fabricating a magnetic recording tape comprising:

providing a non-magnetic support;

applying a magnetic paint comprising a curable resin binder, a lubricant and magnetic particles to one side of the non-magnetic support to form a magnetic layer;

drying and calendering the magnetic layer; and

curing said magnetic layer in contact with the other side of said non-magnetic support so that the magnetic layer has a coefficient of friction not greater than 0.25 and the solubility in tetrahydrofuran of binder resin being not more than 4.5% by weight of the magnetic layer, so that said non-magnetic support has a surface with a profile such that when measured at not less than 10 sample areas, each of 50 μm x 50 μm, the surface of the non-magnetic support being cut along a plane parallel to the three-dimensional average level at a level when the sum of sectional area of projections is 0.8% of the total measured sectional area, the average height of the projections above the section plane is not larger than 50 nm, the number of projections sectioned in a sample area being between 20 and 100.

6. A method according to claim 5, wherein said magnetic layer after the calendering has a root mean square surface roughness of between 2.0 and 6.0 nm.

7. A method according to claim 5 or 6, wherein the other side of said non-magnetic support has a root mean square surface roughness of between 2.0 and 6.0 nm.

8. A method according to claim 5, 6 or 7, wherein the standard deviation of the root mean square surface roughness of the other side is not greater than 5.0 nm.

9. A method according to claim 5, 6, 7 or 8 further comprising the step of providing said non-magnetic support, on the side remote from the magnetic layer, with a coating layer with a thickness of between 0.03 and 2.0 μm, comprising a mixture of inorganic particles having a size of between 0.03 to 0.20 μm and a resin binder.

**Patentansprüche**

1. Magnetisches Aufzeichnungsband, mit einem nichtmagnetischen Träger und einer magnetischen Schicht, wobei die magnetische Schicht ein magnetisches Pulver und ein in einem ausgehärteten Bindeharz verteiltes Gleitmittel aufweist und auf einer Seite des nichtmagnetischen Trägers ausgebildet ist, wobei das Band eine Gesamtdicke von bis zu 20,0 μm, vorzugsweise 4 bis 20 μm hat, wobei die magnetische Schicht einen quadratischen Rauhtiefenmittelwert von zwischen 2,0 nm und 5,5 nm, wenn er mittels eines berührungslosen optischen Oberflächenrauhtiefen-Analysators bestimmt wird, und eine Höhe von einem Level, welcher dem dreidimensionalen Durchschnittslevel entspricht, zu einer maximalen Vertiefung der magnetischen Schicht von zwischen 8 und 25 nm hat, wobei die magnetische Schicht einen Reibungskoeffizienten von nicht größer als 0,25 hat, die Löslichkeit des Bindeharzes in Tetrahydrofuran nicht größer als 4,5 Gew.% der magnetischen Schicht ist.

2. Magnetisches Aufzeichnungsband gemäß Anspruch 1, wobei die Seite des nichtmagnetischen Trägers, die von der magnetischen Schicht abgewandt ist, ein Oberflächenprofil derart hat, daß, wenn es an nicht weniger als 10 Probeflächen gemessen wird, die jeweils 50 μm x 50 μm betragen, und eine Fläche des nichtmagnetischen Trägers entlang einer Ebene geschnitten ist, die horizontal zum dreidimensionalen Durchschnittslevel ist, der Abstand von einem Level, bei welchem die Summe der Schnittflächen von Vorsprüngen 0,8 % der gesamten gemessenen Schnittfläche ist, zu dem höchsten Gipfelpunkt inmitten der Vorsprünge oberhalb der horizontalen Ebene nicht größer als 50 nm als ein Durchschnittswert der Gesamtmessungen ist, und daß die Anzahl der Vorsprünge innerhalb des gemessenen Abschnitts auf dem Level, der 0,8 % der gesamten gemessenen Schnittfläche entspricht, zwischen 20 und 100 ist.

3. Magnetisches Aufzeichnungsband gemäß Anspruch 1 oder 2, wobei das Oberflächenprofil durch Schichten einer Schicht auf den nichtmagnetischen Träger ausgebildet wird, wobei die Beschichtung eine Dispersion von feinen Partikeln mit einer Größe von nicht größer als 0,15 μm in einem Harz aufweist.

4. Magnetisches Aufzeichnungsband gemäß Anspruch 1, 2 oder 3, wobei die magnetische Schicht eine Dicke von zwischen 0,2 und 5 μm hat.

5. Verfahren zur Herstellung eines magnetischen Aufzeichnungsbands, das aufweist

Schaffung eines nichtmagnetischen Trägers,

Aufbringen eines magnetischen Anstrichs, der ein aushärtbares Harzbindemittel, ein Gleitmittel und magnetische Partikel aufweist, auf eine Seite des nichtmagnetischen Trägers, um eine magnetische Schicht auszubilden,

Trocknen und Kalandrieren der magnetischen Schicht, und

Aushärtung der magnetischen Schicht in Berührung mit der anderen Seite des nichtmagnetischen Trägers, so daß die magnetische Schicht einen Reibungskoeffizienten von nicht größer als 0,25 hat und die Löslichkeit des Bindeharzes in Tetrahydrofuran nicht mehr als 4,5 Gew.% der magnetischen Schicht beträgt, so daß der nichtmagnetische Träger eine Oberfläche mit einem Profil derart hat, daß, wenn es an nicht weniger als 10 Probeflächen gemessen wird, die jeweils 50 μm x 50 μm betragen, die Oberfläche des nichtmagnetischen Trägers entlang einer zu dem dreidimensionalen Durchschnittslevel parallelen Ebene an einem Level geschnitten ist, wenn die Summe der Schnittfläche von Vorsprüngen 0,8 % der gesamten gemessenen Schnittfläche ist, die Durchschnittshöhe der Vorsprünge oberhalb der Schnittebene nicht größer als 50 nm ist, wobei die Anzahl der Vorsprünge, in die eine Probefläche unterteilt ist, zwischen 20 und 100 ist.

6. Verfahren gemäß Anspruch 5, wobei die magnetische Schicht nach dem Kalandrieren einen quadratischen Rauhtiefenmittelwert von zwischen 2,0 und 6,0 nm hat.

7. Verfahren gemäß Anspruch 5 oder 6, wobei die andere Seite des nichtmagnetischen Trägers einen quadratischen Rauhtiefenmittelwert von zwischen 2,0 und 6,0 nm hat.

8. Verfahren gemäß Anspruch 5, 6 oder 7, wobei die Standardabweichung des quadratischen Rauhtiefenmittelwerts der anderen Seite nicht größer als 5,0 nm ist.

9. Verfahren gemäß Anspruch 5, 6 ,7 oder 8, das ferner den Schritt aufweist, bei der nichtmagnetische Träger auf der von der magnetischen Schicht abgewandten Seite mit einer Beschichtung versehen wird, die eine Dicke von zwischen 0,03 und 2,0 μm haben, die eine Mischung von anorganischen Partikeln, die eine Größe von 0,03 bis 0,20 μm hat, und ein Harzbindemittel aufweist.

**Revendications**

1. Bande d'enregistrement magnétique comprenant un support non-magnétique et une couche magnétique, la couche magnétique comprenant une poudre magnétique et un lubrifiant dispersé dans une résine durcie formant liant et étant formée sur une des faces du support non-magnétique, ladite bande ayant une épaisseur totale jusqu'à 20,0 μm, de préférence de 4 à 20 μm, ladite couche magnétique ayant une profondeur moyenne quadratique de rugosité de surface comprise entre 2,0 nm et 5,5 nm, lorsque celle-ci est déterminée par un analyseur optique de rugosité de surface sans contact, et une hauteur depuis un niveau correspondant au niveau moyen tridimensionnel jusqu'à un creux maximal de ladite couche magnétique comprise entre 8 et 25 nm, ladite couche magnétique ayant un coefficient de frottement qui n'est pas supérieur à 0,25, la solubilité de la résine formant liant dans du tétrahydrofuranne n'étant pas supérieure à 4,5% en poids de ladite couche magnétique.

2. Bande d'enregistrement magnétique selon la revendication 1, dans laquelle la face dudit support non-magnétique située à l'opposé de la couche magnétique a un profil de surface tel que lorsque celui-ci est mesuré dans des zones ne comportant pas moins de 10 échantillons, chacune mesurant 50 μm x 50 μm, et que la surface du support non-magnétique est coupée le long d'un plan horizontal jusqu'au niveau moyen tridimensionnel, la distance depuis un niveau auquel la somme des superficies de section des saillies représente 0,8% de la superficie de section totale mesurée, jusqu'au sommet le plus élevé parmi les saillies au-dessus du plan horizontal n'est pas supérieure à 50 nm en tant que valeur moyenne des mesures totales, et que le nombre de saillies à l'intérieur de la partie mesurée au niveau correspondant à 0,8% de la superficie de section totale mesurée est compris entre 20 et 100.

3. Bande d'enregistrement magnétique selon la revendication 1 ou 2, dans laquelle ledit profil de surface est formé par dépôt d'une couche de support non-magnétique, ladite couche déposée comprenant une dispersion de fines particules d'une taille qui n'est pas supérieure à 0,15 μm dans une résine.

4. Bande d'enregistrement magnétique selon la revendication 1, 2 ou 3, dans laquelle ladite couche magnétique a une épaisseur comprise entre 0,2 et 5 μm.

5. Procédé de fabrication d'une bande d'enregistrement magnétique, comprenant les étapes consistant :
à préparer un support non-magnétique;
à appliquer un enduit magnétique, comprenant un liant à base de résine durcissable, un lubrifiant et des particules magnétiques, sur une des faces du support non-magnétique de manière à former une couche magnétique;
à faire sécher et à calandrer la couche magnétique; et
à, faire durcir ladite couche magnétique se trouvant en contact avec l'autre face dudit support non-magnétique de telle sorte que la couche magnétique ait un coefficient de frottement qui ne soit pas supérieur à 0,25 et que la solubilité de la résine, en tant que liant, dans le tétrahydrofurane ne soit pas supérieure à 4,5 % en poids de la couche magnétique, de manière que ledit support non-magnétique ait une surface présentant un profil tel que, lorsque celui-ci est mesuré dans des zones ne comportant pas moins de 10 échantillons, chacune mesurant 50 μm x 50 μm, la surface du support non-magnétique étant coupée le long d'un plan parallèle au niveau moyen tridimensionnel à un niveau où la somme de la superficie de section des saillies correspond à 0,8% de la superficie de section totale mesurée, la hauteur moyenne des saillies au-dessus du plan de coupe n'est pas supérieur à 50 nm, le nombre de saillies sectionnées dans la zone d'échantillons étant compris entre 20 et 100.

6. Procédé selon la revendication 5, dans lequel ladite couche magnétique, après le calandrage, présente une profondeur moyenne quadratique de rugosité de surface comprise entre 2,0 et 6,0 nm.

7. Procédé selon la revendication 5 ou 6, dans lequel l'autre face du support non-magnétique présente une profondeur moyenne quadratique de rugosité de surface comprise entre 2,0 et 6,0 nm.

8. Procédé selon les revendications 5, 6 ou 7, dans lequel l'écart type de la profondeur moyenne quadratique de rugosité de surface n'est pas supérieur à 5,0 nm.

9. Procédé selon la revendication 5, 6, 7 ou 8 comprenant, en outre, l'étape consistant à munir la face dudit support non-magnétique qui se trouve à l'opposée de la couche magnétique, d'une couche de revêtement ayant une épaisseur comprise entre 0,03 et 2,0 μm, comprenant un mélange de particules minérales ayant une taille comprise entre 0,03 et 0,20 μm, d'un liant à base de résine.

FIG. 1b

FIG. 1a

FIG. 1d

FIG. 1c

FIG. 2b

FIG. 2d

FIG. 2a

FIG. 2c

FIG. 3

TOTAL SECTIONAL AREA
OF MEASURED PORTION

SECTIONS OF PROJECTIONS AT A LEVEL
CORRESPONDING TO 0.8% OF THE
TOTAL SECTIONAL AREA

EP 0 487 334 B1